# EUROPEAN PATENT SPECIFICATION

(11) **EP 4 227 200 B1**
(45) Date of publication and mention of the grant of the patent: **06.05.2026**
(21) Application number: 21877334.9
(22) Date of filing: 16.09.2021
(51) Int. Cl.: B62L 3/00, B62L 3/08, B60T 8/172, B60T 8/1761

(54) **VEHICLE BRAKE FLUID PRESSURE CONTROL DEVICE**
BREMSDRUCKSTEUERVORRICHTUNG FÜR FAHRZEUGE
DISPOSITIF DE COMMANDE DE PRESSION DE LIQUIDE DE FREIN DE VÉHICULE

(30) Priority: 05.10.2020 JP 2020168280
(43) Date of publication of application: 16.08.2023
(73) Proprietor: Astemo, Ltd., Tokyo (JP)
(72) Inventor: TSUDA Fumiya, Hitachinaka-shi, Ibaraki 312-8503 (JP)
(74) Representative: Dehns
(86) International application number: PCT/JP2021/034053
(87) International publication number: WO 2022/075032

(56) References cited:
- EP-B1- 1 294 599
- JP-A- 2013 129 360
- JP-A- 2015 040 020
- JP-A- H1 111 287
- JP-U- H0 714 180
- US-B2- 6 601 927

## Description

### Technical Field

The present invention relates to a vehicle brake fluid pressure control device.

### Background Art

As a brake fluid pressure control device mainly used in a bar handle type vehicle such as a motorcycle, a motor tricycle, and an all-terrain vehicle (ATV), there is a brake fluid pressure control device capable of executing an anti-lock brake control for stopping wheel locking by compressing, decompressing, or maintaining a brake fluid pressure acting on wheel brakes.

As the above-described brake fluid pressure control device, there is a brake fluid pressure control device that, during execution of a control for decompressing the brake fluid pressure, stops decompression of the brake fluid pressure when grip of a wheel starts to recover and acceleration of the wheel increases (for example, see PTL 1).

In addition, as the above-described brake fluid pressure control device, there is a brake fluid pressure control device that, during execution of a control for decompressing the brake fluid pressure, stops decompression of the brake fluid pressure when grip of a wheel starts to recover and deceleration of the wheel decreases (for example, see PTL 2).
EP 1294599 B1, over which the independent claim is characterised, discloses a method for controlling an antilock braking system (ABS) in the event that a roadway defect (e.g. pothole) is encountered. US 6,601,927 B2 discloses a method for detecting lifting of the rear wheel of a two-wheeled vehicle, and controlling braking.

### Citation list

### Patent Literature

PTL 1: Japanese Patent No. 3629896
PTL 2: JPH05-39020A

### Summary of Invention

### Technical Problem

When the decompression of the brake fluid pressure is stopped based on the acceleration or deceleration of the wheel, as in the above-described vehicle brake fluid pressure control device in the related art, since an amount of change of the acceleration or deceleration is large, it is difficult to adjust a timing of stopping the decompression of the brake fluid pressure.

Furthermore, in these vehicle brake fluid pressure control devices, when a wheel slip amount is large, the brake fluid pressure may be further decompressed by increasing a decompression amount as compared to that in normal decompression of the brake fluid pressure. In this case, in the above-described vehicle brake fluid pressure control device in the related art, even though the normal decompression of the brake fluid pressure is stopped, the increased decompression amount continues to act on the wheel brakes, and therefore, there is a problem that a braking force continues to decrease due to the increased decompression amount even though a wheel speed has started recovering.

An object of the invention is to solve the above-described problem and provide a vehicle brake fluid pressure control device capable of precisely adjusting a timing of stopping the increase in the decompression amount and improving feeling of braking when the brake fluid pressure is further decompressed by increasing a decompression amount as compared to that in the normal decompression of the brake fluid pressure.

### Solution to Problem

In order to solve the above problem, according to the present invention there is provided a vehicle brake fluid pressure control device according to claim 1.

The amount of change in wheel speed clearly shows a timing at which the wheel speed starts recovering. Accordingly, in the vehicle brake fluid pressure control device according to the invention, it is possible to precisely adjust a timing of stopping a control for reducing the braking force by stopping a control for reducing the braking force further than a normal braking force based on the amount of change in wheel speed. Therefore, feeling of braking can be improved.

In the above-described vehicle brake fluid pressure control device, for example, the change amount calculation unit calculates the amount of change by subtracting a wheel speed calculated for an (n-1)th time from a wheel speed detected for an nth time. In this case, it is preferable that the change amount determination unit easily determine a positive value or a negative value of the amount of change by determining that the amount of change is a positive value when the wheel speed detected for the nth time is larger than the wheel speed calculated for the (n-1)th time.

In the above-described vehicle brake fluid pressure control device, for example, the change amount determination unit determines that the amount of change is a positive value when the amount of change is equal to or greater than a threshold value of the amount of change. In this case, the wheel speed can be reliably increased by changing the threshold value of the amount of change according to the wheel speed.

In the above-described vehicle brake fluid pressure control device, for example, the brake control unit stops the first decompression control when the change amount determination unit determines that the amount of change is a positive value and the wheel speed is equal to or greater than a predetermined value.

In this configuration, by reducing the predetermined value of wheel speed, the first decompression control is not stopped at a low wheel speed where the wheel may be locked, and thus it is possible to give a priority to increasing the wheel speed.

In the above-described vehicle brake fluid pressure control device, the electronic control device may include a friction calculation unit that determines a coefficient of friction between the wheel and a road surface. In this case, the brake control unit may be configured to stop the first decompression control when the change amount determination unit determines that the amount of change is a positive value and the coefficient of friction is equal to or greater than a threshold value of the coefficient of friction.

In this configuration, the first decompression control is not stopped on a road surface where the coefficient of friction (µ) between the wheel and the road surface is small and the wheel easily slips, and thus the vehicle body can be stabilized.

The above-described vehicle brake fluid pressure control device may be mounted on a bar handle vehicle, and the wheel speed detection device may be configured to detect wheel speeds of wheels on a front side and a rear side. In this case, it is preferable that the brake control unit starts to adjust a braking force acting on the wheel brake on a rear side after starting adjusting a braking force acting on the wheel brake on a front side.

In this configuration, in the wheel brakes on the front side and the rear side of the bar handle vehicle such as a motorcycle, a timing of stopping the first decompression control can be precisely adjusted based on the wheel speeds, and therefore, feeling of braking of the bar handle vehicle can be improved.

The above-described vehicle brake fluid pressure control device may be mounted on a bar handle vehicle. In this case, it is preferable that the wheel speed detection device detects a wheel speed of the wheel on a front side, and the brake control unit adjusts a braking force acting on the wheel brake on a front side.

In this way, the invention can also be applied to a bar handle vehicle including a simple braking force control device that controls only a braking force of the wheel brake on the front side.

### Advantageous Effects of Invention

In the vehicle brake fluid pressure control device according to the invention, it is possible to precisely adjust, based on the wheel speed, the timing of stopping the control for further decompressing the brake fluid pressure by increasing the decompression amount as compared to that in normal decompression of the brake fluid pressure, and therefore, the feeling of braking can be improved.

### Brief Description of Drawings

[FIG. 1] FIG. 1 is a configuration diagram of a brake fluid pressure control device according to an embodiment of the invention.
[FIG. 2] FIG. 2 is a configuration diagram of an electronic control device according to the embodiment of the invention.
[FIG. 3] FIG. 3 is a configuration diagram of the brake fluid pressure control device according to the embodiment of the invention when executing a control for compressing a brake fluid pressure.
[FIG. 4] FIG. 4 is a flowchart showing a control for stopping a control for reducing a braking force in the brake fluid pressure control device according to the embodiment of the invention.

### Description of Embodiments

An embodiment of the invention will be described in detail with reference to the drawings as appropriate.

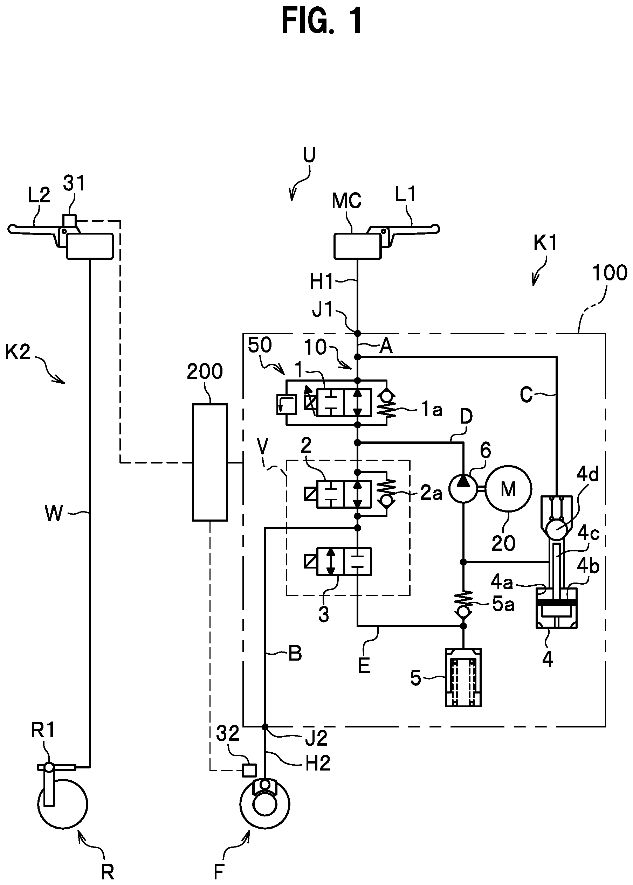

As shown in FIG. 1, a vehicle brake fluid pressure control device U according to the present embodiment (hereinafter, simply referred to as a "brake fluid pressure control device") is used in a bar handle type vehicle such as a motorcycle, a motor tricycle, and an all-terrain vehicle (ATV).

The brake fluid pressure control device U includes two brake levers L1 and L2 on a front wheel side and a rear wheel side, two wheel brakes F and R on the front wheel side and the rear wheel side, a first brake system K1, a second brake system K2, a metal base 100, and a motor 20. In addition, the brake fluid pressure control device U includes an operation amount detection device 31 that detects an operation amount to the brake lever L2, a wheel speed detection device 32, a braking force control device 50, and an electronic control device 200. The wheel speed detection device 32 is a wheel speed sensor that detects a wheel speed of a front wheel.

The brake fluid pressure control device U is capable of executing an anti-lock brake control for the wheel brake F on the front wheel side. In addition, the brake fluid pressure control device U can execute an interlock brake control for generating a braking force in the wheel brake F on the front wheel side in conjunction with the wheel brake R on the rear wheel side.

The first brake system K1 is a fluid pressure circuit that applies a brake fluid pressure to the wheel brake F on the front wheel side. The wheel brake F on the front wheel side is a fluid pressure disk brake that generates a braking force on a wheel by sandwiching a disk between pads by a brake fluid pressure acting on a wheel cylinder.

The first brake system K1 is provided between a master cylinder MC and the wheel brake F. The first brake system K1 is a system extending from an inlet port J1 to an outlet port J2 of the base 100. A pipe H1 extending to the master cylinder MC is connected to the inlet port J1, and a pipe H2 extending to the wheel brake F is connected to the outlet port J2.

The brake lever L1, which is an operator, is connected to the master cylinder MC. The master cylinder MC generates a brake fluid pressure corresponding to a force applied to the brake lever L1 by a driver. The master cylinder MC is connected to the wheel brake F via the first brake system K1.

The first brake system K1 includes a fluid pressure line 10 extending from the master cylinder MC to the wheel brake F, and the braking force control device 50. The braking force control device 50 is a modulator that controls a braking force of the wheel brake F. The braking force control device 50 includes a pressure regulator 1, a control valve section V, a suction valve 4, a reservoir 5, and a pump 6, and these components are assembled to the base 100.

In the following description, in the fluid pressure line 10, a fluid pressure line extending from the inlet port J1 to the pressure regulator 1 is referred to as an "output fluid pressure line A", and a fluid pressure line extending from the pressure regulator 1 to the wheel brake F is referred to as a "wheel fluid pressure line B". In addition, in the fluid pressure line 10, a fluid pressure line branching from the output fluid pressure line A and extending to the pump 6 is referred to as a "suction line C", and a fluid pressure line extending from the pump 6 to the wheel fluid pressure line B is referred to as a "discharge line D". Further, in the fluid pressure line 10, a fluid pressure line extending from the wheel fluid pressure line B to the suction line C is referred to as a "release line E". An "upstream side" means a master cylinder MC side, and a "downstream side" means a wheel brake F side.

The pressure regulator 1 is a normally open proportional solenoid valve (linear solenoid valve) interposed between the output fluid pressure line A and the wheel fluid pressure line B. An electromagnetic coil of the pressure regulator 1, which drives a valve body of the pressure regulator 1, is electrically connected to the electronic control device 200.

Based on a command from the electronic control device 200, the pressure regulator 1 is brought into a closed state when the electromagnetic coil is excited, and is brought into an open state when the electromagnetic coil is demagnetized.

The pressure regulator 1 is brought into the open state when a differential pressure between a brake fluid pressure on a wheel fluid pressure line B side (wheel brake F side) and a brake fluid pressure on an output fluid pressure line A side (master cylinder MC side) is larger than or equal to a valve opening pressure in the closed state. Accordingly, a brake fluid flows from the wheel fluid pressure line B side to the output fluid pressure line A side through the pressure regulator 1.

With the pressure regulator 1, the valve opening pressure can be adjusted by adjusting a value of a current flowing through the electromagnetic coil based on the command from the electronic control device 200.

The brake fluid pressure in the wheel fluid pressure line B is adjusted to a predetermined pressure when the brake fluid flows from the wheel fluid pressure line B to the output fluid pressure line A through the pressure regulator 1. That is, the brake fluid pressure acting on the wheel brake F can be adjusted by adjusting the valve opening pressure of the pressure regulator 1.

The pressure regulator 1 includes a check valve 1a. The check valve 1a is connected in parallel to the pressure regulator 1. The check valve 1a is a one-way valve that allows the brake fluid to flow from the output fluid pressure line A to the wheel fluid pressure line B.

The control valve section V has a function of switching among a state in which the release line E is blocked while opening the wheel fluid pressure line B, a state in which the release line E is opened while blocking the wheel fluid pressure line B, and a state in which the wheel fluid pressure line B and the release line E are blocked. The control valve section V includes an inlet valve 2, a check valve 2a, and an outlet valve 3.

The inlet valve 2 is a normally open solenoid valve provided in the wheel fluid pressure line B, and leads to the pressure regulator 1 and the wheel brake F. The inlet valve 2 allows the brake fluid to flow from the upstream side to the downstream side in an open state, and blocks between the upstream side and the downstream side in a closed state.

An electromagnetic coil of the inlet valve 2, which drives a valve body of the inlet valve 2, is electrically connected to the electronic control device 200, and based on a command from the electronic control device 200, the inlet valve 2 is brought into the closed state when the electromagnetic coil is excited, and is brought into the open state when the electromagnetic coil is demagnetized.

The check valve 2a is a one-way valve that allows only flow of the brake fluid from the downstream side to the upstream side, and is connected in parallel to the inlet valve 2.

The outlet valve 3 is a normally closed solenoid valve provided in the release line E, and leads to the wheel brake F and a suction side of the pump 6 to be described later. The outlet valve 3 blocks between the wheel brake F side and a reservoir 5 side in a closed state, and allows the brake fluid to flow from the wheel brake F side to the reservoir 5 side in an open state.

An electromagnetic coil of the outlet valve 3, which drives a valve body of the outlet valve 3, is electrically connected to the electronic control device 200, and based on a command from the electronic control device 200, the outlet valve 3 is brought into the open state when the electromagnetic coil is excited, and is brought into the closed state when the electromagnetic coil is demagnetized.

The reservoir 5 is provided in the release line E, and has a function of temporarily storing the brake fluid released by opening the outlet valve 3. A check valve 5a, which allows only flow of the brake fluid from the reservoir 5 side to a pump 6 side, is interposed between the reservoir 5 and the pump 6.

The pump 6 is interposed between the suction line C and the discharge line D. The pump 6 is driven by a rotational force of the motor 20, sucks the brake fluid stored in the reservoir 5 of the suction line C, and discharges the brake fluid to the discharge line D.

The motor 20 is a power source of the pump 6 provided in the first brake system K1, and is an electric component that operates based on a command from the electronic control device 200.

The suction valve 4 switches between a state in which the suction line C is opened and a state in which the suction line C is blocked. The suction valve 4 is normally closed, and is opened by a difference between the brake fluid pressure on the output fluid pressure line A side (master cylinder MC side) and a brake fluid pressure on a suction port side of the pump 6.

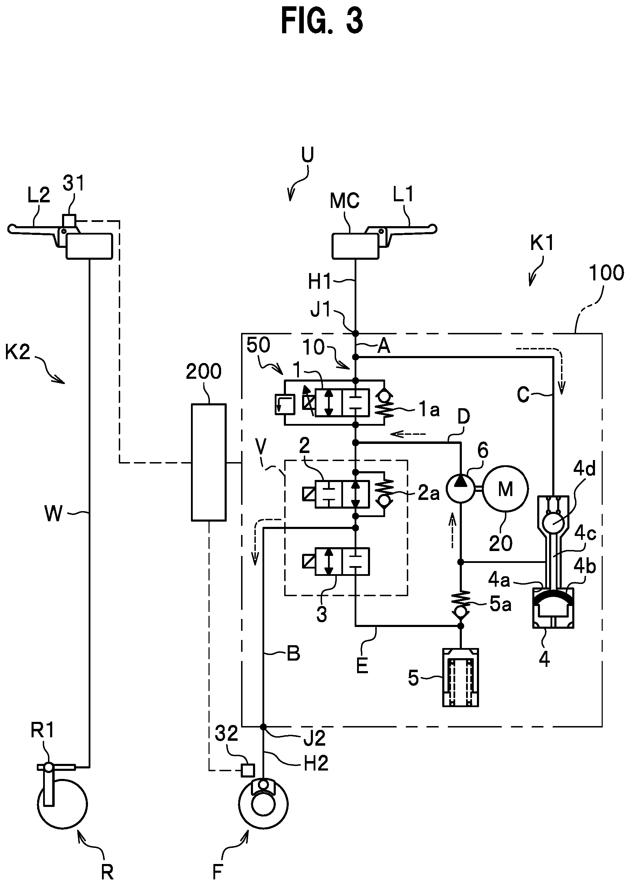

When the pump 6 operates and a pressure of the suction line C on the suction port side of the pump 6 becomes a vacuum pressure, as shown in FIG. 3, a pressure of a vacuum pressure chamber 4a communicating with the suction line C on the suction port side of the pump 6 becomes a vacuum pressure. A diaphragm 4b of the suction valve 4 is elastically deformed toward a valve body 4d side by this vacuum pressure, and a plunger 4c pushes up a valve body 4d. Accordingly, the valve body 4d is separated from a valve seat, and the suction valve 4 is brought into an open state.

As shown in FIG. 1, the second brake system K2 directly operates the wheel brake R on the rear wheel side by an operation to the brake lever L2, which is a brake operator, to generate a braking force.

One end of a brake wire W is connected to the brake lever L2. The other end of the brake wire W is connected to a rod R1 of the wheel brake R on the rear wheel side.

The wheel brake R on the rear wheel side is a mechanical drum brake that generates a braking force on the wheel when the brake wire W is pulled by the operation on the brake lever L2 to tilt the rod R1 and press a brake shoe against an inner peripheral surface of a drum.

The electronic control device 200 is a microcomputer including a central processing unit (CPU), a read only memory (ROM), a random access memory (RAM), and the like. The electronic control device 200 according to the present embodiment executes the anti-lock brake control and the interlock brake control.

The electronic control device 200 controls opening and closing of the pressure regulator 1, the inlet valve 2, and the outlet valve 3 and controls an operation of the motor 20 based on various information from a fluid pressure sensor, a wheel speed sensor, and the like.

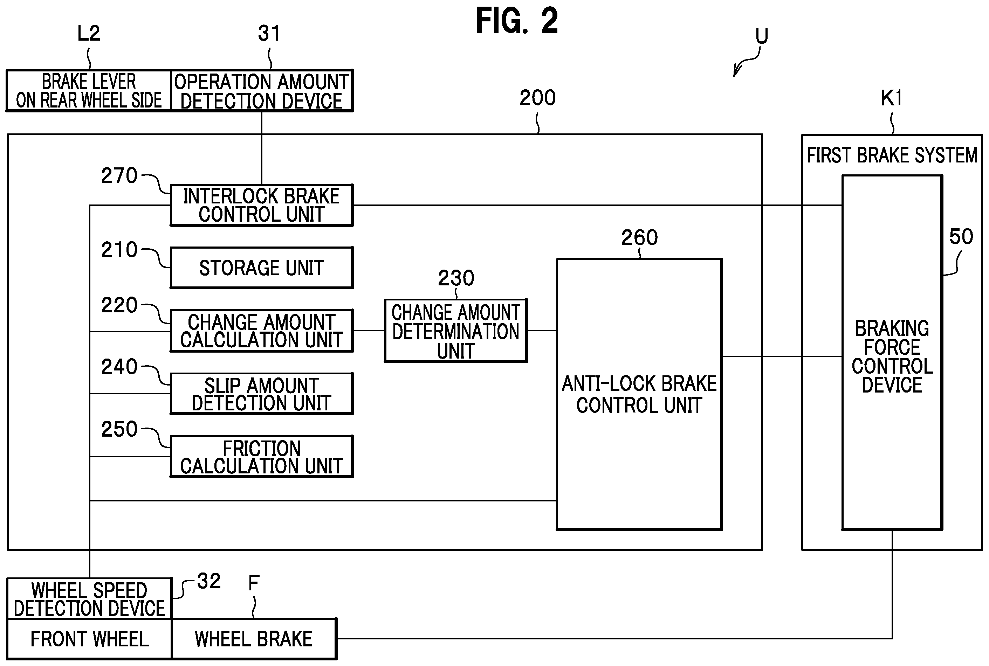

As shown in FIG. 2, the electronic control device 200 includes a storage unit 210, a change amount calculation unit 220, a change amount determination unit 230, a slip amount detection unit 240, a friction calculation unit 250, an anti-lock brake control unit 260, and an interlock brake control unit 270.

The slip amount detection unit 240 detects a slip amount of the front wheel based on various information such as the wheel speed detected by the wheel speed detection device 32.

The friction calculation unit 250 calculates a coefficient of friction (µ) between the front wheel and a road surface based on various information such as the wheel speed of the front wheel detected by the wheel speed detection device 32 and vibration of a vehicle body detected by a behavior sensor (not shown).

The change amount calculation unit 220 calculates the amount of change in wheel speed over time of the front wheel. In the present embodiment, the amount of change in wheel speed of the front wheel is calculated by subtracting a wheel speed calculated by the wheel speed detection device 32 for the (n-1)th time from a wheel speed detected by the wheel speed detection device 32 for the nth time.

The change amount determination unit 230 determines that the amount of change in wheel speed is a positive value when the wheel speed detected by the wheel speed detection device 32 for the nth time is larger than the wheel speed calculated by the wheel speed detection device 32 for the (n-1)th time, and the amount of change in wheel speed is equal to or greater than the threshold value of the amount of change. The threshold value of the amount of change is set for each wheel speed and stored in the storage unit 210 in advance.

The interlock brake control unit 270 executes the interlock brake control for also applying a braking force corresponding to a magnitude of a braking force on the rear wheel side to the wheel brake F on the front wheel side.

The anti-lock brake control unit 260 controls the braking force control device 50 based on various information from the fluid pressure sensor, the wheel speed detection device 32, and the like, and executes the anti-lock brake control for compressing, decompressing, or maintaining the brake fluid pressure of the wheel brake F to stop locking of the wheel.

The anti-lock brake control unit 260 stops the control for decompressing the brake fluid pressure when an elapsed time from the start of the control for decompressing the brake fluid pressure (control for reducing the braking force) reaches a predetermined time.

The anti-lock brake control unit 260 may also stop the control for decompressing the brake fluid pressure based on a slip level, the coefficient of friction between the wheel and the road surface, and the wheel speed even when the elapsed time from the start of the anti-lock brake control does not reach a predetermined time.

Next, the interlock brake control, an anti-lock brake non-control, and the anti-lock brake control implemented by the electronic control device 200 will be described mainly with reference to the fluid pressure circuit in FIG. 1.

### (Interlock Brake Control)

The interlock brake control is executed when it is determined that it is necessary to also apply the braking force corresponding to the magnitude of the braking force on the rear wheel side to the wheel brake F on the front wheel side by the interlock brake control unit 270 (see FIG. 2) of the electronic control device 200 when the driver operates the brake lever L2 on the rear wheel side, or operates both the brake lever L1 on the front wheel side and the brake lever L2 on the rear wheel side but the brake lever L1 on the front wheel side is insufficiently operated.

For example, when the driver operates the brake lever L2 on the rear wheel side, the interlock brake control unit 270 (see FIG. 2) determines whether it is necessary to apply the braking force to the front wheel as well based on various information from the operation amount detection device 31 and the wheel speed detection device 32. Then, when determining that it is necessary to apply the braking force to the wheel brake F on the front wheel side as well, the interlock brake control unit 270 (see FIG. 2) closes the pressure regulator 1 of the first brake system K1, opens the inlet valve 2, and closes the outlet valve 3 to operate the motor 20.

As shown in FIG. 3, since the vacuum pressure chamber 4a of the suction valve 4 becomes a vacuum pressure when the motor 20 operates and the pump 6 operates, the valve body 4d is pushed up by the plunger 4c, and the suction valve 4 is brought into an open state. When the suction valve 4 is brought into the open state, the brake fluid flowing into the vacuum pressure chamber 4a from the suction line C on the master cylinder MC side flows into the suction line C on the pump 6 side and is sucked by the pump 6. Then, the brake fluid is discharged from the pump 6 to the discharge line D, the brake fluid flows from the discharge line D into the wheel fluid pressure line B, and thus the brake fluid pressure in the wheel fluid pressure line B is compressed.

### (Anti-Lock Brake Non-Control)

When determining that there is no possibility of locking the front wheel, the anti-lock brake control unit 260 (see FIG. 2) of the electronic control device 200 does not execute the anti-lock brake control.

During the anti-lock brake non-control, in the first brake system K1, all of the above-described plurality of electromagnetic coils that drive the plurality of solenoid valves are demagnetized by the anti-lock brake control unit 260 (see FIG. 2). That is, in a normal brake control, the pressure regulator 1 and the inlet valve 2 are in a valve-open state, and the outlet valve 3 and the suction valve 4 are in a valve-closed state.

In such a state, when the driver operates the brake lever L1 on the front wheel side, a brake fluid pressure is generated in the master cylinder MC due to an operation force. The brake fluid pressure is transmitted to the wheel brake F on the front wheel side via the output fluid pressure line A, the pressure regulator 1, and the wheel fluid pressure line B, and the front wheel is braked. When the brake lever L1 is released, the brake fluid flowing into the wheel fluid pressure line B is returned to the master cylinder MC via the pressure regulator 1 and the output fluid pressure line A.

In the second brake system K2 on the rear wheel side, when the driver operates the brake lever L2 on the rear wheel side, the brake wire W is operated by an operation force, thus the braking force is generated in the wheel brake R on the rear wheel side, and the rear wheel is braked.

### (Anti-Lock Brake Control)

The anti-lock brake control is executed when the wheel is about to be locked while the braking force is being generated by an input to the brake lever L1, and is implemented by controlling the control valve section V to appropriately select decompressing the brake fluid pressure acting on the wheel brake F, compressing the brake fluid pressure acting on the wheel brake F, or maintaining the brake fluid pressure acting on the wheel brake F at a constant level. Selection of the decompression, compression, or maintenance of the brake fluid pressure is determined by the anti-lock brake control unit 260 (see FIG. 2) of the electronic control device 200 based on the wheel speed obtained from the fluid pressure sensor and the wheel speed detection device 32 and the slip amount of the front wheel.

Then, when the anti-lock brake control unit 260 (see FIG. 2) determines that the brake fluid pressure acting on the wheel brake F is to be decompressed, the wheel fluid pressure line B is blocked from the master cylinder MC and the release line E is opened to the reservoir 5 side by the control valve section V. Specifically, the inlet valve 2 is excited to be brought into the valve-closed state and the outlet valve 3 is excited to be brought into the valve-open state by the electronic control device 200.

In this way, the brake fluid in the wheel fluid pressure line B leading to the wheel brake F flows into the reservoir 5 through the release line E, and as a result, the brake fluid pressure acting on the wheel brake F is decompressed.

The anti-lock brake control unit 260 (see FIG. 2) stops the decompression of the brake fluid pressure in the anti-lock brake control when an elapsed time from the start of the anti-lock brake control reaches a predetermined time. Accordingly, the reduction of the braking force of the wheel brake F due to the anti-lock brake control is stopped.

When the anti-lock brake control unit 260 (see FIG. 2) determines that the brake fluid pressure acting on the wheel brake F is to be maintained constant, the wheel fluid pressure line B and the release line E are blocked by the control valve section V. Specifically, the inlet valve 2 is excited to be brought into the valve-closed state and the outlet valve 3 is demagnetized to be brought into the valve-closed state by the electronic control device 200.

In this way, the brake fluid is confined in a fluid pressure line closed by the wheel brake F, the inlet valve 2, and the outlet valve 3, and as a result, the brake fluid pressure acting on the wheel brake F is maintained constant (the braking force of the wheel brake F is maintained constant).

Further, when the anti-lock brake control unit 260 (see FIG. 2) determines that the brake fluid pressure acting on the wheel brake F is to be compressed, the wheel fluid pressure line B is opened and the release line E is blocked by the control valve section V. Specifically, the inlet valve 2 is demagnetized to be brought into the valve-open state, the outlet valve 3 is demagnetized to be brought into the valve-closed state, and the pressure regulator 1 is excited to be brought into a valve-closed state by the electronic control device 200, the value of the current flowing through the electromagnetic coil is adjusted based on the command from the electronic control device 200, and thus the valve opening pressure of the pressure regulator 1 is adjusted. When the motor 20 is driven by a control device 7, the pump 6 is operated as the motor 20 is driven, the brake fluid stored in the reservoir 5 is returned to the wheel fluid pressure line B via the discharge line D, and thus the pressure of the brake fluid in the wheel fluid pressure line B is compressed. In addition, compression by the master cylinder MC is also performed by opening the pressure regulator 1.

At this time, a spring provided in the reservoir 5 biases a piston of the reservoir 5 to cause the piston to return to an initial position. The suction valve 4 is in the closed state until the pressure on the suction side of the pump 6 becomes the vacuum pressure.

When a compression control is continuously executed, as shown in FIG. 3, the pump 6 is continuously operated, the pressure of the vacuum pressure chamber 4a of the suction valve 4 becomes the vacuum pressure, thus the valve body 4d is pushed up by the plunger 4c, and the suction valve 4 is brought into the open state.

When the suction valve 4 is brought into the open state, the brake fluid flowing into the vacuum pressure chamber 4a from the suction line C on the master cylinder MC side flows into the suction line C on the pump 6 side and is sucked by the pump 6.

Then, the brake fluid is discharged from the pump 6 to the discharge line D, the brake fluid flows from the discharge line D into the wheel fluid pressure line B, and thus the brake fluid pressure in the wheel fluid pressure line B is compressed.

Further, when determining that a slip having a slip amount larger than the above-described slip amount occurs in the front wheel and the brake fluid pressure acting on the wheel brake is to be further decompressed (slip level ≥ 1), the anti-lock brake control unit 260 executes a first decompression control for further decompressing the brake fluid pressure acting on the wheel brake by increasing a decompression amount according to the slip level.

When the control for decompressing the brake fluid pressure is executed in the anti-lock brake control, the electronic control device 200 according to the present embodiment stops the control for decompressing the brake fluid pressure when grip of the wheel starts to recover and acceleration of the wheel increases.

That is, the electronic control device 200 according to the present embodiment may also stop the control for decompressing the brake fluid pressure even when the elapsed time from the start of the anti-lock brake control does not reach the predetermined time. In this way, by stopping the control for decompressing the brake fluid pressure in the anti-lock brake control, it is possible to recover to a braking force normally generated in accordance with the operation amount of the brake lever L1.

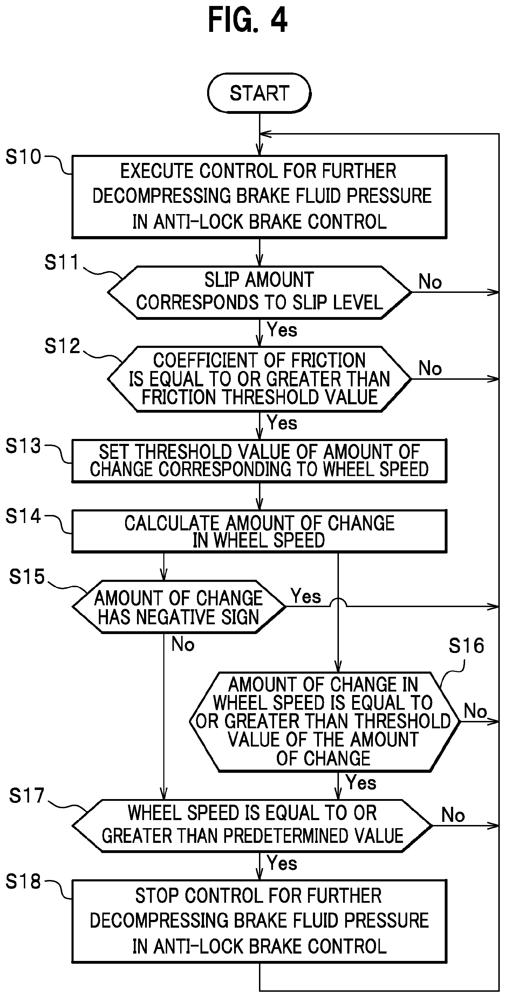

Next, a control for stopping the first decompression control for reducing the braking force further than the normal braking force in the anti-lock brake control will be described. In the following description, a flowchart in FIG. 4 will be referred to as appropriate.

First, the anti-lock brake control unit 260 shown in FIG. 2 determines whether the decompression amount of the brake fluid pressure is equal to or less than a threshold value during execution of the control for decompressing the brake fluid pressure in the anti-lock brake control (step S10). The threshold value of the decompression amount is stored in the storage unit 210 in advance.

When the decompression amount of the brake fluid pressure is greater than the threshold value, in a case where the slip amount is large, such as when a traveling road surface changes from a road surface having a high coefficient of friction to a road surface having a low coefficient of friction (also referred to as µ jump), in consideration of safety, the anti-lock brake control unit 260 continues the control for decompressing the brake fluid pressure (step S10).

Further, when the decompression amount of the brake fluid pressure is equal to or less than the threshold value, the anti-lock brake control unit 260 determines whether the slip amount detected by the slip amount detection unit 240 is equal to or greater than a predetermined slip level (step S11). The slip level is stored in the storage unit 210 in advance.

When the slip amount does not correspond to the slip level (slip level = 0) (NO in step S11), the anti-lock brake control unit 260 continues the control for decompressing the brake fluid pressure (step S10).

When the slip amount corresponds to the slip level (slip level ≥ 1) (YES in step S11), the anti-lock brake control unit 260 determines whether the coefficient of friction calculated by the friction calculation unit 250 is equal to or greater than a threshold value of the coefficient of friction (step S12). The threshold value of the coefficient of friction is stored in the storage unit 210 in advance.

When the coefficient of friction is smaller than the threshold value of the coefficient of friction (NO in step S12), since the road surface has a low coefficient of friction, in consideration of safety, the anti-lock brake control unit 260 continues the control for decompressing the brake fluid pressure (step S10).

When the coefficient of friction is equal to or greater than the threshold value of the coefficient of friction (YES in step S12), the anti-lock brake control unit 260 sets a threshold value of the amount of change corresponding to the wheel speed detected by the wheel speed detection device 32 (step S13). The threshold value of the amount of change is stored for each wheel speed in the storage unit 210 in advance.

Subsequently, the change amount calculation unit 220 subtracts the wheel speed calculated by the wheel speed detection device 32 for the (n-1)th time from the wheel speed detected by the wheel speed detection device 32 for the nth time. In this way, the change amount calculation unit 220 calculates the amount of change in wheel speed of the front wheel (step S14). Then, the change amount determination unit 230 determines a positive or negative sign of the amount of change in wheel speed of the front wheel (step S15).

When the wheel speed detected for the nth time is smaller than the wheel speed calculated for the (n-1)th time, the change amount determination unit 230 determines that the amount of change in wheel speed is a negative value (YES in step S15). In this case, since the wheel speed is not recovered, the anti-lock brake control unit 260 continues the control for decompressing the brake fluid pressure (step S10).

The anti-lock brake control unit 260 determines whether the amount of change in wheel speed is equal to or greater than a threshold value of the amount of change (step S16). The threshold value of the amount of change is a value greater than zero and is stored in the storage unit 210 in advance.

In the change amount determination unit 230, when the wheel speed detected for the nth time is larger than the wheel speed calculated for the (n-1)th time (NO in step S15), or the amount of change in wheel speed is smaller than the threshold value of the amount of change (NO in step S16), the anti-lock brake control unit 260 determines that a recovery amount of the wheel speed is small, and continues the control for decompressing the brake fluid pressure (step S10).

When the amount of change in wheel speed is equal to or greater than the threshold value of the amount of change (YES in step S16), the anti-lock brake control unit 260 determines that the amount of change in wheel speed of the front wheel is a positive value. Further, the anti-lock brake control unit 260 determines whether the wheel speed detected by the wheel speed detection device 32 is equal to or greater than a predetermined value (step S17).

When the wheel speed is smaller than the predetermined value (NO in step S17), since the wheel may be locked, the anti-lock brake control unit 260 continues the control for decompressing the brake fluid pressure (step S10).

When the wheel speed is equal to or greater than the predetermined value (YES in step S17), the anti-lock brake control unit 260 stops the first decompression control for reducing the braking force further than the normal braking force (step S18). In this way, when the electronic control device 200 stops the control for reducing the braking force further than the normal braking force, recovering to the braking force normally generated by the anti-lock brake control is realized.

In the brake fluid pressure control device U as described above, as shown in FIG. 2, by stopping the control for reducing the braking force further than the normal braking force in the anti-lock brake control based on the amount of change in wheel speed, it is possible to recover to the braking force normally generated in the anti-lock brake control.

Since the change in wheel speed clearly shows the timing at which the grip of the wheel starts recovering, in the brake fluid pressure control device U according to the present embodiment, it is possible to precisely adjust the timing of stopping the control for reducing the braking force further than the normal braking force in the anti-lock brake control based on the amount of change in wheel speed. Therefore, feeling of braking can be improved.

In the brake fluid pressure control device U according to the present embodiment, the positive or negative value of the amount of change is easily determined by calculating the amount of change by subtracting the wheel speed calculated for the (n-1)th time from the wheel speed detected for the nth time.

In the brake fluid pressure control device U according to the present embodiment, the control for decompressing the brake fluid pressure is stopped when the coefficient of friction (µ) between the wheel and the road surface is equal to or greater than the threshold value of the coefficient of friction. In this configuration, the control for decompressing the brake fluid pressure is not stopped on a road surface where the coefficient of friction between the wheel and the road surface is small and the wheel easily slips, and thus the vehicle body can be stabilized.

In the brake fluid pressure control device U according to the present embodiment, when the amount of change in wheel speed is equal to or greater than the threshold value of the amount of change, the control for reducing the braking force further than the normal braking force in the anti-lock brake control is stopped. In this configuration, the wheel speed can be reliably increased by changing the threshold value of the amount of change according to the wheel speed.

In the brake fluid pressure control device U according to the present embodiment, when the wheel speed is equal to or greater than the predetermined value, the control for reducing the braking force further than the normal braking force in the anti-lock brake control is stopped. In this configuration, by reducing the predetermined value of wheel speed, the control for reducing the braking force further than the normal braking force in the anti-lock brake control is not stopped at a low wheel speed where the wheel may be locked, and thus it is possible to give a priority to increase in the wheel speed.

Although the embodiment of the invention has been described above, the invention is not limited to the embodiment described above, and can be appropriately modified without departing from the scope of the invention.

In the brake fluid pressure control device U according to the present embodiment, as shown in FIG. **4****,** when the slip amount corresponds to the slip level and the coefficient of friction between the wheel and the road surface is equal to or greater than the friction threshold value, the control for decompressing the brake fluid pressure is stopped based on the amount of change in wheel speed. However, the control for decompressing the brake fluid pressure may be stopped based only on the amount of change in wheel speed.

In the brake fluid pressure control device U according to the present embodiment, the electronic control device 200 shown in FIG. 1 can execute the anti-lock brake non-control, the anti-lock brake control, and the interlock brake control, but the electronic control device 200 may be configured to execute other brake control.

For example, the electronic control device 200 may be configured to execute a brake assist control for generating the braking force in the wheel brake F on the front wheel side by operating the pump 6 in a state where the pressure regulator 1 is opened and causing the brake fluid to flow into the wheel fluid pressure line B when the brake lever L1 on the front wheel side is operated.

In the brake fluid pressure control device U according to the present embodiment, the second brake system K2 is a mechanical brake system, but the second brake system may be a fluid pressure brake system.

In this case, in the brake fluid pressure control device U, it is preferable to improve the feeling of braking of the bar handle vehicle by starting to adjust the braking force acting on the rear wheel brake after starting adjusting the braking force acting on the front wheel brake.

In the present embodiment, a case where the brake fluid pressure control device according to the invention is applied to the motorcycle is described as an example, but the brake fluid pressure control device according to the invention can also be applied to a four-wheeled bar handle vehicle as long as the brake fluid pressure control device according to the invention includes an independent brake system. In this case, wheel brakes of two front wheels are connected to one brake system, and wheel brakes of two rear wheels are connected to the other brake system. The brake lever L2 on the rear wheel side may be used as a brake pedal.

In the brake fluid pressure control device U according to the present embodiment, the mechanical suction valve 4 is used, but the suction valve may be implemented by a solenoid valve that is opened and closed based on a command from the electronic control device 200. A configuration in which the suction valve 4 and the pressure regulator 1 are not provided may also be used.

### Reference Signs List

1 Pressure regulator
2 Inlet valve
3 Outlet valve
4 Suction valve
4a Vacuum pressure chamber
4b Diaphragm
4c Plunger
4d Valve body
5 Reservoir
6 Pump
7 Control device
10 Fluid pressure line
20 Motor
31 Operation amount detection device
32 Wheel speed detection device
50 Braking force control device
100 Base
200 Electronic control device
210 Storage unit
220 Change amount calculation unit
230 Change amount determination unit
240 Slip amount detection unit
250 Friction calculation unit
260 Anti-lock brake control unit
270 Interlock brake control unit
A Output fluid pressure line
B Wheel fluid pressure line
C Suction line
D Discharge line
E Release line
K1 First brake system
K2 Second brake system
L1 Brake lever on front wheel side
L2 Brake lever on rear wheel side
MC Master cylinder
F Wheel brake on front wheel side
R Wheel brake on rear wheel side
U Brake fluid pressure control device
V Control valve section
W Brake wire

## Claims

1. A vehicle brake fluid pressure control device comprising:
a wheel speed detection device (32) configured to detect wheel speed of a wheel;
a braking force control device (50) configured to execute an anti-lock brake control for adjusting a braking force acting on a wheel brake by compressing, decompressing, or maintaining a brake fluid pressure acting on the wheel brake; and
an electronic control device (200), wherein
the electronic control device includes:
a change amount calculation unit (220) that calculates a change in wheel speed over time;
a change amount determination unit (230) that determines whether the sign of the change in wheel speed is positive or negative; and
a brake control unit (260) that controls the braking force control device; and the device is **characterised in that**:
during execution of a first decompression control, in which a braking force acting on the wheel brake is further reduced by a decompression amount larger than a decompression amount of the brake fluid pressure in the anti-lock brake control in a state where the braking force acting on the wheel brake is reduced in the anti-lock brake control, when the change in wheel speed is determined to be a positive value by the change amount determination unit, the brake control unit stops the first decompression control.

2. The vehicle brake fluid pressure control device according to claim 1, wherein
the change amount calculation unit (220) calculates the change in wheel speed by subtracting a wheel speed calculated for an (n-1)th time from a wheel speed detected for an nth time, and
the change amount determination unit (230) determines that the change in wheel speed is a positive value when the wheel speed detected for the nth time is larger than the wheel speed calculated for the (n-1)th time.

3. The vehicle brake fluid pressure control device according to claim 1, wherein
the change amount determination unit (230) determines that the change in wheel speed is a positive value when the change in wheel speed is equal to or greater than a threshold value.

4. The vehicle brake fluid pressure control device according to any one of claims 1 to 3, wherein
the brake control unit (260) stops the first decompression control when the change amount determination unit determines that the change in wheel speed is a positive value and the wheel speed is equal to or greater than a predetermined value.

5. The vehicle brake fluid pressure control device according to any one of claims 1 to 4, wherein
the electronic control device (200) includes a friction calculation unit that determines a coefficient of friction between the wheel and a road surface, and
the brake control unit (260) stops the first decompression control when the change amount determination unit determines that the change in wheel speed is a positive value and the coefficient of friction is equal to or greater than a threshold value of the coefficient of friction.

6. The vehicle brake fluid pressure control device according to any one of claims 1 to 5, wherein
the vehicle brake fluid pressure control device is mounted on a bar handle vehicle,
the wheel speed detection device detects wheel speeds of wheels on a front side and a rear side, and
the brake control unit starts to adjust a braking force acting on the wheel brake on a rear side after starting adjusting a braking force acting on the wheel brake on a front side.

7. The vehicle brake fluid pressure control device according to any one of claims 1 to 5, wherein
the vehicle brake fluid pressure control device is mounted on a bar handle vehicle,
the wheel speed detection device detects a wheel speed of the wheel on a front side, and
the brake control unit adjusts a braking force acting on the wheel brake on a front side.

## Patentansprüche

1. Fahrzeugbremsfluiddrucksteuervorrichtung, umfassend:
eine Radgeschwindigkeitserfassungsvorrichtung (32), die dazu ausgebildet ist, die Radgeschwindigkeit eines Rades zu erfassen;
eine Bremskraftsteuervorrichtung (50), die dazu ausgebildet ist, eine Antiblockierbremssteuerung zum Einstellen einer auf eine Radbremse wirkende Bremskraft durch Komprimieren, Dekomprimieren oder Aufrechterhalten eines auf die Radbremse wirkenden Bremsfluiddrucks auszuführen; und
eine elektronische Steuervorrichtung (200), wobei
die elektronische Steuervorrichtung einschließt:
eine Änderungsbetragsberechnungseinheit (220), die eine Änderung der Radgeschwindigkeit über die Zeit berechnet;
eine Änderungsbetragsbestimmungseinheit (230), die bestimmt, ob das Vorzeichen der Änderung der Radgeschwindigkeit positiv oder negativ ist; und
eine Bremssteuereinheit (260), die die Bremskraftsteuervorrichtung steuert; und wobei die Vorrichtung **dadurch gekennzeichnet ist, dass**:
während der Ausführung einer ersten Dekompressionssteuerung, bei der eine auf die Radbremse wirkende Bremskraft um einen Dekompressionsbetrag weiter reduziert wird, der größer ist als ein Dekompressionsbetrag des Bremsfluiddrucks bei der Antiblockierbremssteuerung, in einem Zustand, in dem die auf die Radbremse wirkende Bremskraft bei der Antiblockierbremssteuerung reduziert ist, wenn die Änderung der Radgeschwindigkeit von der Änderungsbetragsbestimmungseinheit als positiver Wert bestimmt wird, die Bremssteuereinheit die erste Dekompressionssteuerung beendet.

2. Fahrzeugbremsfluiddrucksteuervorrichtung nach Anspruch 1, wobei
die Änderungsbetragsberechnungseinheit (220) durch Subtrahieren einer für ein (n-1)-tes Mal berechneten Radgeschwindigkeit von einer für ein n-tes Mal erfassten Radgeschwindigkeit die Änderung der Radgeschwindigkeit berechnet, und
die Änderungsbetragsbestimmungseinheit (230) bestimmt, dass die Änderung der Radgeschwindigkeit ein positiver Wert ist, wenn die für das n-te Mal erfasste Radgeschwindigkeit größer ist als die für das (n-1)-te Mal berechnete Radgeschwindigkeit.

3. Fahrzeugbremsfluiddrucksteuervorrichtung nach Anspruch 1, wobei
die Änderungsbetragsbestimmungseinheit (230) bestimmt, dass die Änderung der Radgeschwindigkeit ein positiver Wert ist, wenn die Änderung der Radgeschwindigkeit gleich oder größer als ein Schwellenwert ist.

4. Fahrzeugbremsfluiddrucksteuervorrichtung nach einem der Ansprüche 1 bis 3, wobei
die Bremssteuereinheit (260) die erste Dekompressionssteuerung beendet, wenn die Änderungsbetragsbestimmungseinheit bestimmt, dass die Änderung der Radgeschwindigkeit ein positiver Wert ist und die Radgeschwindigkeit gleich oder größer als ein vorbestimmter Schwellenwert ist.

5. Fahrzeugbremsfluiddrucksteuervorrichtung nach einem der Ansprüche 1 bis 4, wobei
die elektronische Steuervorrichtung (200) eine Reibungsberechnungseinheit einschließt, die einen Reibungskoeffizienten zwischen dem Rad und einer Fahrbahnoberfläche bestimmt, und
die Bremssteuereinheit (260) die erste Dekompressionssteuerung beendet, wenn die Änderungsbetragsbestimmungseinheit bestimmt, dass die Änderung der Radgeschwindigkeit ein positiver Wert ist und der Reibungskoeffizient gleich oder größer als ein Schwellenwert des Reibungskoeffizienten ist.

6. Fahrzeugbremsfluiddrucksteuervorrichtung nach einem der Ansprüche 1 bis 5, wobei
die Fahrzeugbremsfluiddrucksteuervorrichtung auf einer Fahrzeuglenkstange montiert ist,
die Radgeschwindigkeitserfassungsvorrichtung Radgeschwindigkeiten von Rädern auf einer Vorderseite und einer Rückseite erfasst, und
die Bremssteuereinheit beginnt, eine auf die Radbremse auf einer Rückseite wirkende Bremskraft einzustellen, nachdem sie begonnen hat, eine auf die Radbremse auf einer Vorderseite wirkende Bremskraft einzustellen.

7. Fahrzeugbremsfluiddrucksteuervorrichtung nach einem der Ansprüche 1 bis 5, wobei
die Fahrzeugbremsfluiddrucksteuervorrichtung auf einer Fahrzeuglenkstange montiert ist,
die Radgeschwindigkeitserfassungsvorrichtung eine Radgeschwindigkeit des Rades auf der Vorderseite erfasst, und
die Bremssteuereinheit eine auf die Radbremse auf der Vorderseite wirkende Bremskraft einstellt.

## Revendications

1. Dispositif de commande de pression de liquide de frein de véhicule comprenant :
un dispositif (32) de détection de vitesse de roue configuré pour détecter la vitesse de roue d'une roue ;
un dispositif (50) de commande de force de freinage configuré pour exécuter une commande de frein antiblocage pour ajuster une force de freinage agissant sur un frein de roue par compression, décompression ou maintien d'une pression de liquide de frein agissant sur le frein de roue ; et
un dispositif (200) de commande électronique, dans lequel
le dispositif de commande électronique inclut :
une unité de calcul (220) de quantité de changement qui calcule un changement de vitesse de roue au fil du temps ;
une unité de détermination (230) de quantité de changement qui détermine si le signe de changement de vitesse de roue est positif ou négatif ; et
une unité de commande (260) de frein qui commande le dispositif de commande de force de freinage ; et le dispositif est **caractérisé en ce que** :
lors de l'exécution d'une première commande de décompression, dans laquelle une force de freinage agissant sur le frein de roue est en outre réduite d'une quantité de décompression plus grande qu'une quantité de décompression de la pression de liquide de frein dans la commande de frein antiblocage dans un état où la force de freinage agissant sur le frein de roue est réduite dans la commande de frein antiblocage, lorsque le changement de la vitesse de roue est déterminée comme étant une valeur positive par l'unité de détermination de quantité de changement, l'unité de commande de frein arrête la première commande de décompression.

2. Dispositif de commande de pression de liquide de frein de véhicule selon la revendication 1, dans lequel
l'unité de calcul (220) de quantité de changement calcule le changement de vitesse de roue par soustraction d'une vitesse de roue calculée une (n-1)ème fois d'une vitesse de roue détectée une nème fois, et
l'unité de détermination (230) de quantité de changement détermine que le changement de vitesse de roue est une valeur positive lorsque la vitesse de roue détectée la nème fois est plus grande que la vitesse de roue calculée la (n-1)ème fois.

3. Dispositif de commande de pression de liquide de frein de véhicule selon la revendication 1, dans lequel
l'unité de détermination (230) de quantité de changement détermine que le changement de vitesse de roue est une valeur positive lorsque le changement de vitesse de roue est supérieur ou égal à une valeur seuil.

4. Dispositif de commande de pression de liquide de frein de véhicule selon l'une quelconque des revendications 1 à 3, dans lequel
l'unité de commande (260) de frein arrête la première commande de décompression lorsque l'unité de détermination de quantité de changement détermine que le changement de vitesse de roue est une valeur positive et que la vitesse de roue est supérieure ou égale à une valeur prédéterminée.

5. Dispositif de commande de pression de liquide de frein de véhicule selon l'une quelconque des revendications 1 à 4, dans lequel
le dispositif (200) de commande électronique inclut une unité de calcul de frottement qui détermine un coefficient de frottement entre la roue et une surface de route, et
l'unité de commande (260) de frein arrête la première commande de décompression lorsque l'unité de détermination de quantité de changement détermine que le changement de vitesse de roue est une valeur positive et que le coefficient de frottement est supérieur ou égal à une valeur seuil du coefficient de frottement.

6. Dispositif de commande de pression de liquide de frein de véhicule selon l'une quelconque des revendications 1 à 5, dans lequel
le dispositif de commande de pression de liquide de frein de véhicule est monté sur un véhicule à guidon,
le dispositif de détection de vitesse de roue détecte les vitesses de roue des roues d'un côté avant et d'un côté arrière, et
l'unité de commande de frein commence à ajuster une force de freinage agissant sur le frein de roue d'un côté arrière après le début de l'ajustement d'une force de freinage agissant sur le frein de roue d'un côté avant.

7. Dispositif de commande de pression de liquide de frein de véhicule selon l'une quelconque des revendications 1 à 5, dans lequel
le dispositif de commande de pression de liquide de frein de véhicule est monté sur un véhicule à guidon,
le dispositif de détection de vitesse de roue détecte une vitesse de roue de la roue d'un côté avant, et
l'unité de commande de frein ajuste une force de freinage agissant sur le frein de roue d'un côté avant.
